# EUROPEAN PATENT APPLICATION

(11) **EP 1 017 158 A2**
(43) Date of publication of application: **05.07.2000**
(21) Application number: 99125898.9
(22) Date of filing: 24.12.1999
(51) Int. Cl.: H02P 1/18

(54) **A device for controlling the starting phase of an electric motor**

(30) Priority: 30.12.1998 IT TO981097
(71) Applicant: FIAT AUTO S.p.A., 10135 Torino (IT)
(72) Inventor: Andronaco, Carrnelo, 10040 Volvera (Torino) (IT); Collinucci, Luigi, 10137 Torino (IT)
(74) Representative: Cian, Paolo

(57) **Abstract**

A device for controlling the starting phase of an electric motor (10) is described, particularly for a DC electric motor for driving an electric fan unit of a motor vehicle.

This device includes an electric circuit (16) connected to the electric motor (10) and to a power supply (12). The electric circuit (16) comprises, in combination, elements (B₁, B₂, 20, 30) for regulating a drive current to the motor and a timing device (40) capable of controlling the regulator elements in such a way as to vary the magnitude of the current according to a predetermined time sequence in a transient period during the starting phase of the electric motor (10) for the purpose of bringing this motor (10) to reach a running speed of rotation (V₁) gradually and in a predetermined time.

## Description

The present invention relates to a device for controlling the starting phase of an electric motor, and more specifically a device for controlling the starting phase of a DC electric motor for driving an electric fan unit for a motor vehicle, as described in the preamble of Claim 1.

An electric fan unit is, for example, present in a motor vehicle in association with a heat exchange radiator stack to convey a stream of air from the outside to cool this stack. Such an electric fan unit includes at least one fan blade disposed adjacent the frontal surface of the radiator stack and an associated electric motor for driving it to rotate, connected to it directly or remotely by means of transmission members.

The electric motor is controlled to operate by sensor means detecting the temperature of the coolant liquid. When this temperature exceeds a limit value, conventionally close to 90°C, the motor is activated and driven to rotate at a predetermined speed to force the ventilation in the vicinity of the heat exchanger stack. More complex systems for controlling the cooling also contemplate the opportunity of driving the motor to rotate at two separate predetermined speeds in dependence on the value of the detected temperature of the coolant liquid.

To avoid inconveniences upon starting the electric motor, it is preferable to approach this procedure by supplying the electric motor gradually to obtain a likewise gradual attainment of the full predetermined speed of rotation. In fact, in the first moments of operation the electric motor has not yet developed its counterelectromotive force opposed to the supply voltage and if the motor is started by applying to its terminals the full supply voltage, the magnitude of the current assumes very high values which, in some cases, may not be tolerable by the motor and the supply network itself. Moreover, a sharp activation of the motor is not advisable in order to avoid, upon starting, sharply driving the mechanical members to rotate, which could cause them damage after repeated actuations.

For example, if at least one fan blade is driven by the electric motor by means of a belt transmission such as a multiple groove belt called V-grooves, which engages a corresponding pulley fitted onto the shaft of the fan, the sharp application of the power of the motor upon starting the fan can cause slippage between the belt and the pulley which can rapidly wear the belt.

For the purpose of obtaining a gradual starting of the motor, the subject of the invention is a device for controlling the starting phase of an electric motor including an electric circuit connected to the motor and to a power supply, and characterised in that the said circuit comprises, in combination, means for regulating a motor drive current and timing means capable of controlling the regulator means in such a way as to vary the magnitude of the current according to a predetermined time sequence in a transient period during the starting phase of the electric motor, for the purpose of bringing the said motor gradually and in a predetermined time to its full speed of rotation.

In a first embodiment of the invention the means for regulating the motor drive current comprise at least one circuit branch having resistive characteristics, interposed between a terminal of the motor and a common ground conductor, and comprising a plurality of resistive elements. The timing means include a counter device and are capable of progressively reducing the action of the resistive elements of the branch according to a predetermined timing law in such a way as gradually to reduce the equivalent resistance of the branch itself until reaching a steady state value. This action causes a gradual increase in the speed of rotation of the motor until reaching a predetermined speed.

In a second embodiment of the invention the means for regulating the drive current of the motor comprise at least one electronic switch such as, for example, a MOSFET transistor, connected in series with the motor itself and driven via pulse width modulated enabling signals generated by a suitably programmed processor unit.

Further characteristics and advantages of the invention will be explained in more detail in the following detailed description, given purely by way of non-limitative example, with reference to the attached drawings, in which:
Figure 1 is a circuit diagram of a first embodiment of the device according to the invention;
Figure 2 is a diagram of the variation in time of the speed of rotation of the electric motor using the device according to the embodiment of Figure 1;
Figure 3 is a circuit diagram of a second embodiment of the device according to the invention; and
Figure 4 is a diagram of the variation in time of the speed of rotation of the electric motor using the device according to the embodiment of Figure 3.

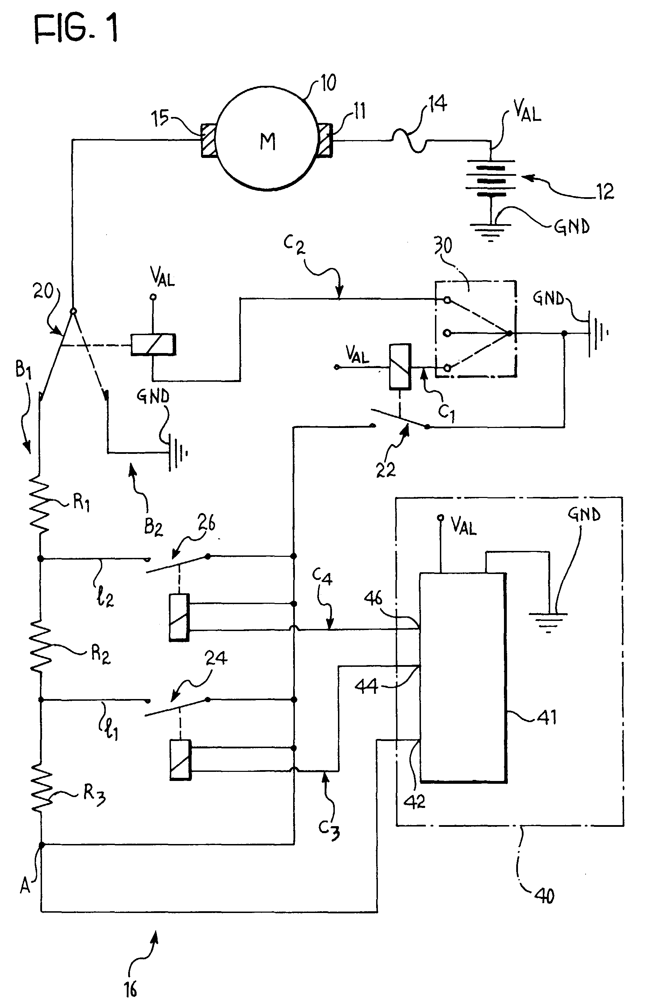

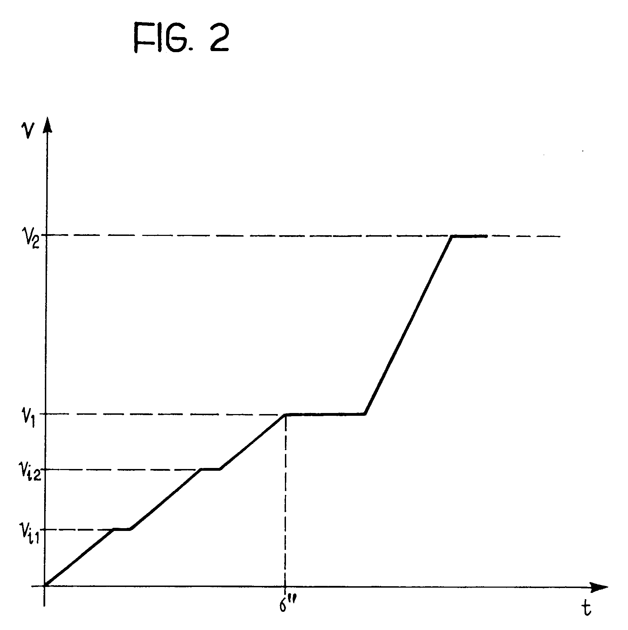

In a first embodiment, described with reference to Figures 1 and 2, an electric motor for driving an electric fan is schematically indicated 10. A first terminal 11 of the motor 10 is coupled to a power supply source 12, for example the vehicle battery, via a protection fuse 14. The voltage provided by this source is indicated V_{AL}. A second terminal 15 of the motor 10 can be coupled to a first circuit branch B₁ or to a second circuit branch B₂ of an electric circuit 16 via a current switch 20 of electromagnetic type, the rest position of which is such that the motor is connected to the first branch B₁.

The first circuit branch B₁ has a plurality of resistive elements R₁, R₂, R₃ disposed substantially in series and allows connection of the motor 10 with a common ground conductor GND via a switch 22 also of electromagnetic type.

A plurality of shunt lines l₁, 1₂ which branch off from nodes common to consecutive resistive elements is connected to the common ground conductor GND via the switch 22. Each of these shunt lines has a selector device 24 and 26 respectively, formed by means of an electromagnetically operated contactor, the rest position of which is such that the contacts are open.

The second circuit branch B₂ on the other hand is constituted in this particular embodiment by a direct path to the common ground conductor GND.

The switch 22 and the current switch 20 are driven by means of respective excitation circuits C₁ and C₂, supplied from the same battery 12 and coupled to the ground conductor GND by means of a three-way switch device 30.

In the particular application described, this switch device is controlled to operate by a temperature sensor (not shown) which detects the temperature reached by the coolant liquid which circulates in the vehicle radiator.

In dependence on the temperature detected the switch device 30 can activate the operation of the motor at a first speed V₁ by closing the switch 22 to cause current to flow through the motor and the first branch B₁, if the detected temperature lies in a first temperature range, or can increment the speed of rotation of the motor by driving the current switch 20 and switching the path of the current from the motor through the second branch B₂, if the detected temperature lies in a second temperature range greater than the first.

Alternatively, the current switch 20 may be replaced by a simple electromagnetic switch disposed in the second circuit branch B₂ and again controlled by the excitation circuit C₂, instead providing a permanent connection between the second terminal 15 of the motor 10 and the first circuit branch B₁.

These two arrangements are equivalent to one another and, hereinafter, by way of example, only the embodiment comprising the current switch 20 will be analysed in detail.

A control unit 40 is associated with the first circuit branch B₁. This control unit comprises a counter 41 having an activation input 42 and two drive outputs 44 and 46 respectively. Input 42 of the counter is coupled to a node A of the first branch B₁, substantially disposed between the series of resistive elements R₁, R₂, R₃ of the first branch and the switch 22. Each drive output is coupled to the same node A via a respective excitation circuit C₃ and C₄ for the contacts 24 and 26.

The counter 41 is preferably formed by using a cascade of integrated timing circuits of the type commercially known by the reference 555, configured as monostable circuits in a circuit arrangement known in the art.

The operation of the entire device upon increase in the temperature of the coolant liquid detected by the temperature sensor is described hereinafter.

When this temperature is lower than a first predetermined threshold value, for example 87°C, the switch 30 remains in a first operative configuration in which it assumes the position of an open switch decoupling both the excitation circuits of the switch 22 and the current switch 20 from ground. The current switch 20 remains in its rest condition connecting the second terminal 15 of the motor with the first circuit branch B₁, the switch 22 remains in its open contact rest position. In this condition no current flows in either of the branches B₁ and B₂ nor through the motor 10, which therefore remains stationary.

The node A not being connected to ground GND, has a high voltage substantially corresponding to the voltage provided by the power supply source 12, and this value is provided at the input to the counter 41.

When the detected temperature exceeds the first predetermined value, whilst remaining within a first range of values, for example 87°-92°C, the switch 30 is driven to adopt a second operative configuration in which it assumes the position of a closed switch in the excitation circuit C₁ of the switch 22. In this condition the switch 22 closes and starts a current flowing in the branch B₁ and through the motor 10. The node A is then directly connected to the ground GND and reaches a voltage close to that of the ground conductor less the potential drop across the terminals of the switch 22.

The electric motor 10 starts to rotate at a first intermediate low speed Vᵢ₁ supplied by a low current with respect to that necessary to rotate the motor at a first predetermined speed of rotation V₁. This current, or in an equivalent way the voltage across the terminals of the motor, is defined by the transient equivalent resistance of the circuit 16 connecting the motor to ground, which is the sum of the resistances in the resistive elements R₁, R₂, R₃ in series.

Simultaneously the voltage drop at the node A is perceived by the counter 41 through the activation input 42 and interpreted as a signal commanding count activation.

When the count reaches a first predetermined value, corresponding to the elapse of a short time interval of several seconds, the counter 41 emits at the drive output 44 a signal the voltage of which is greater than the potential of the ground conductor, controlling a current to flow in the excitation circuit C₃ of the contactor 24. Consequently the contactor 24 closes and the shunt line l₁ short circuits the resistive element R₃. The transient equivalent resistance of the circuit 16 connecting the motor 10 to ground is now the sum of the resistances of the resistive elements R₁ and R₂ in series. This equivalent resistance value is less than that in the preceding case, and therefore a greater drive current will flow through the motor, in the last analysis increasing its speed of rotation (which will be equal to a second intermediate value Vᵢ₂).

When the count reaches a second predetermined value, for example corresponding to the elapse of the total time interval of about six seconds from the starting of the electric motor, the counter 41 emits at its drive output 46 a high voltage signal similar to that previously emitted at the output 44, controlling a current also to flow in the excitation circuit C₄ of the contactor 26. Consequently the contactor 26 closes and the shunt line l₂ also short circuits the resistive elements R₂. The equivalent resistance of the circuit 16 connecting the motor 10 to ground is now the steady state equivalent resistance of the first branch B₁, defined solely by the resistance of the resistive element R₁. This equivalent resistance value is less than that obtained in the preceding case, therefore further increasing the driving current in the motor, and this will reach its first predetermined full speed of operation V₁.

According to the invention the achievement of the first predetermined speed of rotation V₁ of the motor 10 takes place therefore by degrees as is more clearly illustrated in Figure 2, under the control of the counter 41 which operates as a programmed timer. In alternative embodiments from that described it is naturally possible to envisage a greater number of steps in the approach to the first full speed and likewise a different disposition of the resistive elements in the first circuit branch B₁.

When the detected temperature exceeds a second predetermined threshold value of 92°C, the switch 30 is driven to adopt a third operative configuration in which it assumes the position of a closed switch in the excitation circuit C₂ of the current switch 20. In this condition the switch 22 is no longer excited and therefore opens, and the current switch 20 commutes coupling the motor 10 to the common ground conductor GND through the branch circuit B₂.

The node A is no longer connected to ground GND and experiences a voltage rise which is sensed by the counter 41 through the input 42 and interpreted as a reset signal.

The equivalent resistance to ground seen at the second terminal 15 of the motor 10 is now represented by the resistance introduced by the second circuit branch B₂, less than the smallest resistance introduced by any combination of the resistive elements of the first branch B₁. The current driving the motor is such as to control rotation of the motor at a second predetermined speed of rotation V₂ greater than V₁.

When the detected temperature falls, the switch 30 can again commute to the second operative configuration, controlling the motor again to run at the first speed V₁.

Then the temperature further falls below the first threshold value, the switch 30 commutes to the first operative configuration controlling the motor to stop.

The entire circuit 16 is ready for a new operating cycle similar to that described.

This embodiment can be improved by also forming the second circuit branch B₂ with a plurality of resistive elements through which current can flow selectively in dependence on the configuration of associated selector means in a manner similar to that described for the first branch B₁. In this way, by controlling these selector means through the control unit, a gradual increase in the speed of rotation of the motor would be obtained even between the first and second predetermined operating speeds and, in conclusion, an even less sharp behaviour of the motor.

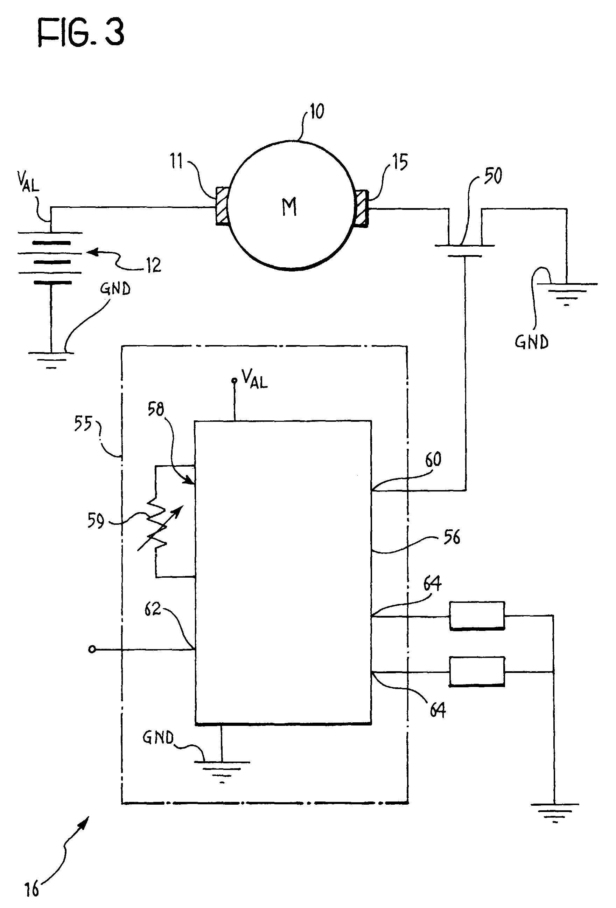

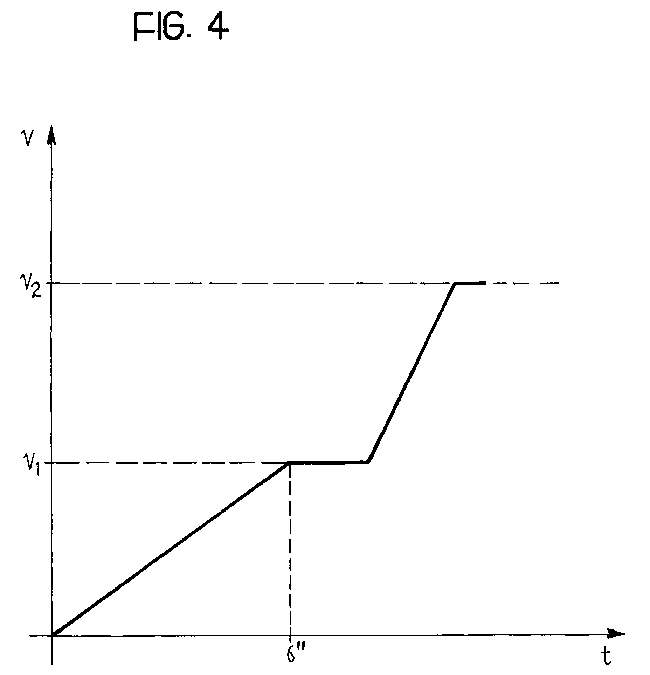

In a second embodiment of the invention, described with reference to Figures 3 and 4, the electric motor and its terminals are identified with the same reference numerals. The first terminal 11 of the motor 10 is coupled to the power supply 12. The second terminal 15 of the motor is coupled to a drain electrode of an electronic switch 50, whilst the source electrode of the same switch is connected to the common ground conductor GND.

The electronic switch 50 is formed as a MOSFET power transistor able to withstand driving currents of the electric motor of the order of 30-50 A.

A control unit 55 is associated with the switch 50. This control unit comprises a processor unit 56 such as a microcontroller, having a first input 58 and a first control output 60. The input 58 of the microcontroller is coupled to a temperature sensor 59 such as a thermistor, the law of variation of the electrical resistance of which in dependence on temperature is known. The control output 60 is coupled to the gate electrode of the electronic switch 50.

The microcontroller 56 is a known component available on the market and will not be described in detail. It is represented by an integrated circuit comprising at least a microprocessor, a memory circuit and a series of input and output interface circuits. Such component is intended to be programmed for operation by mapping in memory a predetermined relation between inputs and outputs.

In this embodiment further inputs and outputs are indicated, respectively a second input 62 and second outputs 64, for the simultaneous management of further actuator devices in dependence on associated input signals.

The operation of the entire device upon an increase in the temperature of the coolant liquid detected by the temperature sensitive resistor 59 is described hereinafter.

By simulating the behaviour of the motor, an optimised relation has been preliminarily derived between the input 58 and the output 60, by means of which it is possible to determine delays, thresholds and instantaneous speeds of the motor 10. The microcontroller 56 thus programmed provides a signal at its control output 60 of the pulse width modulated (PWM) type with a duty cycle variable between 3% and 97% in dependence on the temperature of the coolant liquid detected by the thermistor 59 coupled to the input 58.

When this temperature is less than the first predetermined threshold value (87°C) the microcontroller 56 emits at the output 60 a signal such as to control the MOSFET transistor 50 to be off. In this condition no current flows from the power supply 12 through the motor 10 and this therefore remains stationary.

When the detected temperature exceeds the first predetermined threshold value, whilst remaining within a first previously specified range of values (87°-92°C), the microcontroller 56 emits at the output 60 a PWN signal driving the transistor 50 to turn periodically on for a time interval defined by the determined duty cycle. In this condition a current begins to flow through the motor 10 the magnitude of which is defined substantially by the average value calculated in the entire period of the PWM driving signal.

The electric motor 10 starts to rotate supplied by a low current with respect to that necessary to rotate at a first predetermined speed of rotation V₁. The achievement of this speed of rotation takes place gradually as is clearly illustrated in the diagram of Figure 4. The speed of rotation increases linearly under the control of the microcontroller 56, this latter varying the duty cycle of the transistor 50 driving signal continuously up to a predetermined reference value within a predetermined time interval, for example six seconds.

When the detected temperature exceeds the second predetermined threshold value (92°C), the processing unit 56 controls a further variation of the duty cycle of the transistor 50 driving signal such as to increase the transistor on period. The current driving the motor increases linearly to control the rotation of the motor at the second predetermined speed of rotation V₂.

Upon reduction in the temperature, the microcontroller 56 controls a variation of the duty cycle such as to reduce the period of conduction of the transistor 50 to obtain a value of the speed of rotation of the motor 10 corresponding to the detected temperature.

When the temperature falls further below the first threshold value, the transistor 50 is definitively turned off, thereby interrupting the flow of current and stopping the motor, and the control unit 55 is set for a new operating cycle similar to that described.

## Claims

1. A device for controlling the starting phase of an electric motor (10), particularly a DC electric motor for driving an electric fan unit for a motor vehicle, including an electric circuit (16) connected to the motor (10) and to a power supply (12), characterised in that the said circuit (16) comprises, in combination, means (B₁, B₂, 20, 30; 50) for regulating a motor drive current, and timing means (40; 55) capable of controlling the regulator means in such a way as to vary the magnitude of the current according to a predetermined time sequence in a transient period during the starting phase of the electric motor (10), for the purpose of bringing the said motor (10) gradually and in a predetermined time to its full speed of rotation (V₁).

2. A device according to Claim 1, characterised in that the current regulator means comprise at least one first circuit branch (B₁) having a resistive characteristic interposed between a terminal (15) of the electric motor (10) and a common conductor (GND) maintained at a reference potential, the first circuit branch (B₁) being traversable by a current for driving the motor (10) to control the rotation of the motor (10) at a first predetermined speed (V₁), and comprising:
a plurality of resistive elements (R₁, R₂, R₃) through which current can flow selectively; and
selector means (24, 26) associated with the said plurality of resistive elements (R₁, R₂, R₃) and adapted to cause at least one transient resistive combination, and a steady state resistive combination such as to define a predetermined steady state equivalent resistance value whereby in the first branch (B₁) a drive current for the motor (10) flows to drive the motor (10) to rotate at the said first predetermined speed (V₁);
and in that the timing means include a control unit (40) adapted to drive the selector means (24, 26) according to a predetermined timing law in such a way that the equivalent resistance of the first branch (B₁) gradually falls until it reaches the steady state resistance value whereby the speed of rotation of the motor (10) gradually increases until it reaches the said first predetermined speed of rotation (V₁).

3. A device according to Claim 2, characterised in that the control unit (40) comprises a counter device (41) having a command input (42) and at least one drive output (44, 46) for driving the selector means (24, 26), the said input (42) being able to receive a count activation/disactivation signal and the said at least one output (44, 46) being adapted to emit a respective driving signal to corresponding selector means (24, 26).

4. A device according to Claim 2 or Claim 3, characterised in that the selector means (24, 26) include electromagnetic contactors.

5. A device according to any of Claims 2 to 4, characterised in that the first circuit branch (B₁) comprises switch means (22) adapted to disconnect the said terminal (15) of the electric motor (10) from the common conductor (GND) in such a way as to interrupt the flow of drive current of the electric motor (10) through the first branch (B₁).

6. A device according to any of Claims from 2 to 5, characterised in that the said resistive elements (R₁, R₂, R₃) are disposed in series with one another, the selector means (24, 26) being interposed in respective shunt lines (l₁, l₂) which branch from nodes common to consecutive resistive elements and are connected to the said common conductor (GND).

7. A device according to any of Claims 2 to 6, characterised in that the electric circuit (16) comprises a second branch (B₂) disposed substantially in parallel to the first branch (B₁) and having a steady state equivalent resistance different from that of the first branch such that a motor drive current acting to control rotation of the motor (10) at a second predetermined speed (V₂) can flow through the second branch (B₂).

8. A device according to Claim 7, characterised in that it comprises current switch means (20) for directing the motor (10) drive current alternatively to the first or the second circuit branch (B₁; B₂).

9. A device according to Claim 8, characterised in that it includes switch means (30) adapted selectively to assume one of a plurality of operative configurations in dependence on a predetermined operating mode of the electric motor (10), including at least:
a first configuration in which the switch means (30) are able to drive the switch means (22) and the current switch means (20) to disconnect the electric motor (10) from the common conductor (GND) in such a way as to prevent the flow of a drive current in the motor (10);
a second configuration in which the switch means (30) are able to pilot the switch means (22) and the current switch means (20) to connect the electric motor (10) to the common conductor (GND) via the first circuit branch (B₁) for the purpose of controlling rotation of the motor (10) at the said first predetermined speed (V₁); and
a third configuration in which the switch means (30) are able to control the switch means (22) and the current switch means (20) to connect the electric motor (10) to the common conductor (GND) through the second circuit branch (B₂) for the purpose of controlling rotation of the motor (10) at the said second predetermined speed (V₂).

10. A device according to Claim 1, characterised in that the current regulator means comprise at least one electronic switch (50) connected in series with the motor (10),
and in that the timing means include a processor unit (56) capable of providing enabling signals for turning the said at least one electronic switch (50) on according to a predetermined law.

11. A device according to Claim 10, characterised in that the electronic switch (50) is controlled via pulse width modulated enabling signals.

12. A device according to Claim 10 or Claim 11, characterised in that the electronic switch (50) is a MOSFET transistor.

13. A device according to any of Claims 10 to 12, characterised in that the timing means (55) have temperature sensor means (59) coupled to the input of the processor unit (56).

14. A device according to Claim 13, characterised in that the temperature sensor means (59) comprise a thermistor.
